(19) Europäisches Patentamt
European Patent Office
Office européen des brevets

(11) **EP 4 436 168 A1**

(12) **EUROPEAN PATENT APPLICATION**
published in accordance with Art. 153(4) EPC

(43) Date of publication:
**25.09.2024 Bulletin 2024/39**

(21) Application number: **22896129.8**

(22) Date of filing: **18.11.2022**

(51) International Patent Classification (IPC):
*H04N 19/11* (2014.01)       *H04N 19/593* (2014.01)
*H04N 19/186* (2014.01)       *H04N 19/176* (2014.01)
*H04N 19/70* (2014.01)

(52) Cooperative Patent Classification (CPC):
**H04N 19/11; H04N 19/176; H04N 19/186;**
**H04N 19/593; H04N 19/70**

(86) International application number:
**PCT/KR2022/018296**

(87) International publication number:
**WO 2023/090932 (25.05.2023 Gazette 2023/21)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **18.11.2021 KR 20210159131**

(71) Applicant: **LG Electronics Inc.**
**Yeongdeungpo-gu**
**Seoul 07336 (KR)**

(72) Inventor: **JANG, Hyeongmoon**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **IMAGE ENCODING/DECODING METHOD AND DEVICE, AND RECORDING MEDIUM HAVING BITSTREAM STORED THEREIN**

(57)     An image decoding/encoding method and device according to the present disclosure may: acquire a first flag indicating whether an intra derivation mode is applied to a current block; acquire a second flag indicating whether BDPCM is applied to a chroma component of the current block, on the basis of the first flag; derive an intra prediction mode of the chroma component on the basis of the second flag; and generate a prediction sample of the chroma component on the basis of the intra prediction mode.

FIG.7

Obtain DIMD flag — S700

Obtain BDPCM flag — S710

Derive intra prediction mode — S720

Generate prediction sample — S730

**Description**

[Technical Field]

The present disclosure relates to an image encoding/decoding method and device, and a recording medium storing a bitstream, and more particularly, relates to an image encoding/decoding method and device using intra prediction, and a recording medium storing a bitstream.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure proposes a method for applying chroma component BDPCM considering Decoder-side Intra Motion Derivation (DIMD).

[Technical Solution]

An image decoding method and device according to the present disclosure may acquire a first flag indicating whether an intra derivation mode is applied to a current block; acquire a second flag indicating whether Block Differential Pulse Coded Modulation (BDPCM) is applied to a chroma component of the current block based on the first flag; derive an intra prediction mode of the chroma component based on the second flag and generate a prediction sample of the chroma component based on the intra prediction mode.

In an image decoding method and device according to the present disclosure, the intra derivation mode may represent a mode for deriving an intra prediction mode by using a reconstructed neighboring sample.

An image decoding method and device according to the present disclosure may obtain a first index indicating an intra prediction mode of the chroma component among a plurality of intra prediction modes when the second flag indicates that the BDPCM is not applied to the chroma component.

In an image decoding method and device according to the present disclosure, the plurality of intra prediction modes may include a chroma intra derivation mode that derives a chroma intra prediction mode by using a reconstructed neighboring sample.

An image decoding method and device according to the present disclosure may obtain a third flag indicating a prediction direction of the BDPCM when the second flag indicates that the BDPCM is applied to the chroma component.

An image decoding method and device according to the present disclosure may obtain the second flag from a bitstream based on whether a predefined condition is satisfied.

In an image decoding method and device according to the present disclosure, the second flag may be obtained from the bitstream only when the first flag indicates that the intra derivation mode is not applied to the current block.

In an image decoding method and device according to the present disclosure, the second flag may be obtained from the bitstream only when a tree type of the current block is a single tree and the first flag indicates that the intra derivation mode is not applied to the current block.

In an image decoding method and device according to the present disclosure, if the predefined condition is not satisfied, the second flag may be inferred to be 0.

An image encoding method and device according to the present disclosure may determine whether an intra derivation mode is applied to a current block, determine whether BDPCM is applied to a chroma component of the current block based on whether the intra derivation mode is applied, determine an intra prediction mode of the chroma component based on whether the BDPCM is applied and generate a prediction sample of the chroma component based on the intra prediction mode.

In an image encoding method and device according to the present disclosure, the intra derivation mode may represent a mode for deriving an intra prediction mode by using a reconstructed neighboring sample.

An image encoding method and device according to the present disclosure may encode a first index indicating an intra prediction mode of the chroma component among a plurality of intra prediction modes when the BDPCM is not applied to the chroma component.

In an image encoding method and device according to the present disclosure, the plurality of intra prediction modes may include a chroma intra derivation mode that derives a chroma intra prediction mode by using a reconstructed neighboring sample.

An image encoding method and device according to the present disclosure may encode a flag indicating a prediction direction of the BDPCM when the BDPCM is applied to the chroma component.

An image encoding method and device according to the present disclosure may encode a flag indicating whether the BDPCM is applied to the chroma component based on whether a predefined condition is satisfied.

In an image encoding method and device according to the present disclosure, a flag indicating whether the BDPCM is applied to the chroma component may be encoded only when the intra derivation mode is not applied to the current block.

In an image encoding method and device according to the present disclosure, a flag indicating whether the BDPCM is applied to the chroma component may be encoded only when a tree type of the current block is a single tree and the intra derivation mode is applied to the current block.

A computer-readable digital storage medium storing encoded video/image information resulting in performing an image decoding method due to a decoding device according to the present disclosure is provided.

A computer-readable digital storage medium storing video/image information generated according to an image encoding method according to the present disclosure is provided.

[Technical Effects]

According to the present disclosure, a decoding step may be simplified by making the encoding conditions of a BDPCM luma the same as those of a BDPCM chroma, and compression efficiency may be also improved by reducing transmitted bits.

[Brief Description of the Drawings]

FIG. 1 shows a video/image coding system according to the present disclosure.

FIG. 2 shows a rough block diagram of an encoding device to which an embodiment of the present disclosure may be applied and encoding of a video/image signal is performed.

FIG. 3 shows a rough block diagram of a decoding device to which an embodiment of the present disclosure may be applied and decoding of a video/image signal is performed.

FIG. 4 shows an example of an intra prediction-based video/image encoding method to which an embodiment of the present disclosure may be applied.

FIG. 5 shows an example of an intra prediction-based video/image decoding method to which an embodiment of the present disclosure may be applied.

FIG. 6 exemplarily shows an intra prediction procedure to which an embodiment of the present disclosure may be applied.

FIG. 7 shows an image decoding method performed by a decoding device according to an embodiment of the present disclosure.

FIG. 8 is a diagram illustrating an intra prediction mode derivation process for a color component according to an embodiment of the present disclosure.

FIG. 9 shows a rough configuration of an intra predictor that performs an image decoding method according to an embodiment of the present disclosure.

FIG. 10 shows an image encoding method performed by an encoding device according to an embodiment of the present disclosure.

FIG. 11 shows a rough configuration of an intra predictor that performs an image encoding method according to an embodiment of the present disclosure.

FIG. 12 shows an example of a contents streaming system to which embodiments of the present disclosure may be applied.

[Detailed Description]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (WC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular area composed of a plurality of CTUs within a specific tile column and a specific tile row of one picture. A tile column is a rectangular area of CTUs having the same height as that of a picture and a width designated by a syntax requirement of a picture parameter set. A tile row is a rectangular area of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular area of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific area of a picture and information related to a corresponding area. One unit may include one luma block and two chroma (ex. cb, cr) blocks. In some cases, a unit may be used interchangeably with a term such as a block or an area, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

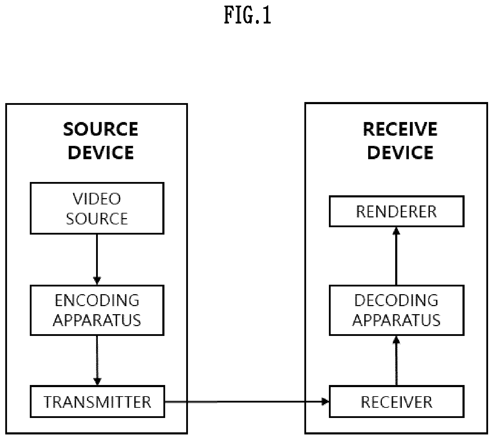

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding device and a transmission unit. The receiving device may include a reception unit, a decoding device and a renderer. The encoding device may be referred to as a video/image encoding device and the decoding device may be referred to as a video/image decoding device. A transmitter may be included in an encoding device. A receiver may be included in a decoding device. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding device may encode an input video/image. An encoding device may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding device.

A decoding device may decode a video/an image by performing a series of procedures such as dequantization, inverse transform, prediction, etc. corresponding to an operation of an encoding device.

A renderer may render a decoded video/image. A rendered video/image may be displayed through a display unit.

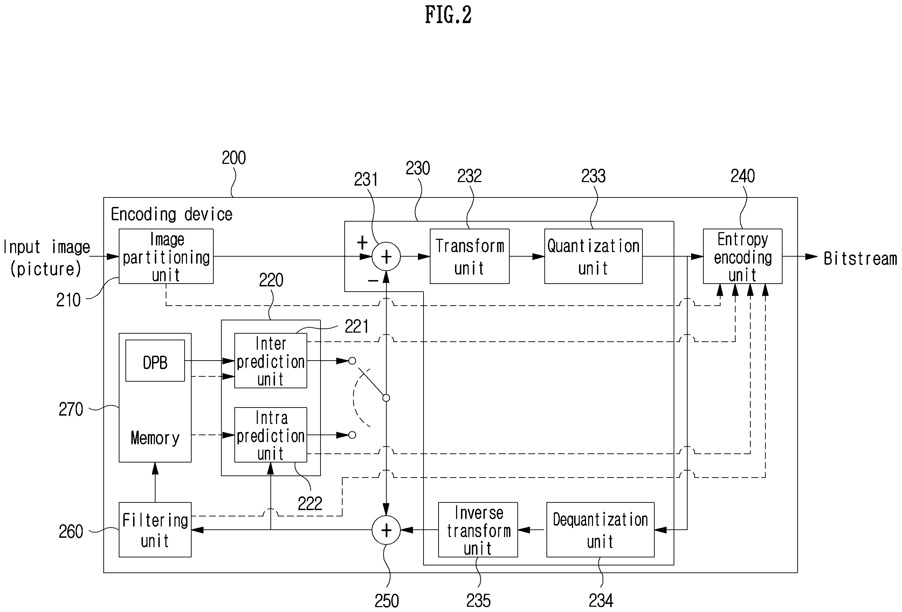

FIG. 2 shows a rough block diagram of an encoding device to which an embodiment of the present disclosure may be applied and encoding of a video/image signal is performed.

Referring to FIG. 2, an encoding device 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) according to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding device 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an area, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding device 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding device 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (LO prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a surrounding block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form.. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding device to a decoding device may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding device 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding device may avoid prediction mismatch in an encoding device 200 and a decoding device, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

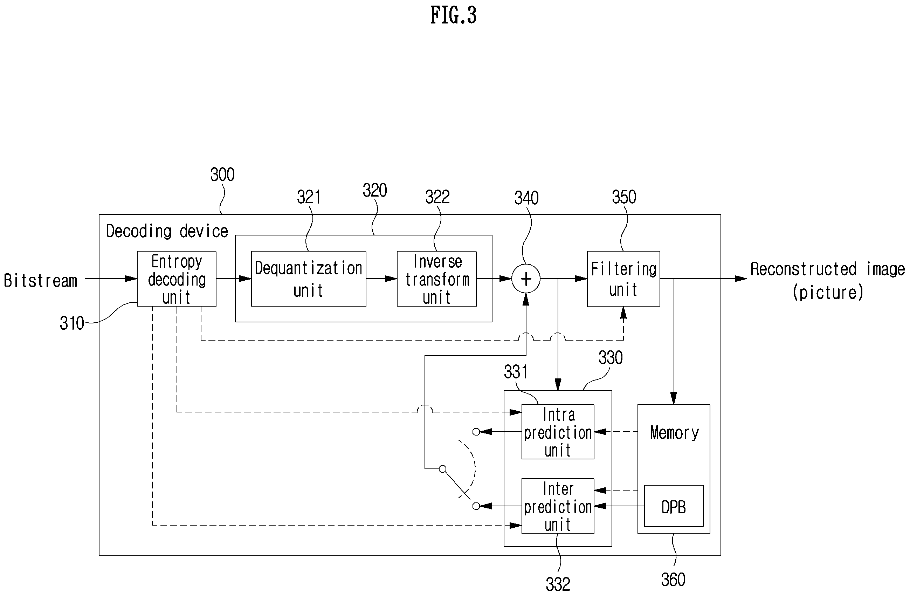

FIG. 3 shows a rough block diagram of a decoding device to which an embodiment of the present disclosure may be applied and decoding of a video/image signal is performed.

Referring to FIG. 3, a decoding device 300 may be configured by including an entropy decoder 310, a residual processor 320, a predictor 330, an adder 340, a filter 350 and a memory 360. A predictor 330 may include an inter predictor 331 and an intra predictor 332. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding device 300 may reconstruct an image in response to a process in which video/image information is processed in an encoding device of FIG. 2. For example, a decoding device 300 may derive units/blocks based on block partition-related information obtained from the bitstream. A decoding device 300 may perform decoding by using a processing unit applied in an encoding device. Accordingly, a processing unit of decoding may be a coding unit, and a coding unit may be partitioned from a coding tree unit or the large coding unit according to a quad tree structure, a binary tree structure and/or a ternary tree structure. At least one transform unit may be derived from a coding unit. And, a reconstructed image signal decoded and output through a decoding device 300 may be played through a playback device.

A decoding device 300 may receive a signal output from an encoding device of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding device may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a surrounding block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding device may be further configured as an internal/external element of a decoding device 300 or a reception unit may be a component of an entropy decoder 310.

Meanwhile, a decoding device according to this specification may be referred to as a video/image/picture decoding device, and the decoding device may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding device. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter prediction unit 332. A memory 360 may store motion information of a block from which motion information in a current picture is derived (or decoded) and/or motion information of blocks in a pre-reconstructed picture. The stored motion information may be transmitted to an inter predictor 260 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding device 200 may be also applied equally or correspondingly to a filter 350, an inter predictor 332 and an intra predictor 331 of a decoding device 300, respectively.

Herein, at least one of quantization/dequantization and/or transform/inverse transform may be omitted. If the quantization/dequantization is omitted, the quantized transform coefficient may be called a transform coefficient. If the transform/inverse transform is omitted, the transform coefficient may be called a coefficient or a residual coefficient, or may be also still called a transform coefficient for unity of expression.

Herein, a quantized transform coefficient and a transform coefficient may be referred to as a transform coefficient and a scaled transform coefficient, respectively. In this case, residual information may include information on transform coefficient(s), and information on the transform coefficient(s) may be signaled through a residual coding syntax. Transform coefficients may be derived based on the residual information (or information on the transform coefficient(s)), and scaled transform coefficients may be derived through inverse transform (scaling) for the transform coefficients. Residual samples may be derived based on inverse transform (transform) for the scaled transform coefficients. It may be applied/expressed also in other parts of the present disclosure.

As described above, in performing video coding, prediction is performed to improve compression efficiency. Through this, a predicted block including prediction samples for a current block, a block to be coded, may be generated.

Here, the predicted block includes prediction samples in a spatial domain (or a pixel domain). The predicted block is derived equally from an encoding device and a decoding device, and the encoding device may improve image coding efficiency by signaling information on a residual between the original block and the predicted block (residual information), not an original sample value itself of an original block, to a decoding device. A decoding device may derive a residual block including residual samples based on the residual information, generate a reconstructed block including reconstructed samples by combining the residual block and the predicted block, and generate a reconstructed picture including reconstructed blocks.

The residual information may be generated through a transform and quantization procedure. For example, an encoding device may derive a residual block between the original block and the predicted block, perform a transform procedure on residual samples (a residual sample array) included in the residual block to derive transform coefficients, and derive transform coefficients quantized by performing a quantization procedure on the transform coefficients to signal related residual information (through a bitstream) to a decoding device. Here, the residual information may include information on a value of the quantized transform coefficients, position information and information on a transform technique, a transform kernel, a quantization parameter, etc. A decoding device may perform a dequantization/inverse transform procedure based on the residual information and derive residual samples (or residual blocks). A decoding device may generate a reconstructed picture based on a predicted block and the residual block. An encoding device may also derive a residual block by dequantizing/inversely transforming quantized transform coefficients for reference for inter prediction of a subsequent picture and generate a reconstructed picture based on it.

Intra prediction may represent prediction that generates prediction samples for a current block based on reference samples within a picture to which a current block belongs (hereinafter, a current picture). When intra prediction is applied to a current block, neighboring reference samples to be used for intra prediction of a current block may be derived. The neighboring reference samples of a current block may include a sample adjacent to a left boundary of a current block in a nWxnH size and a total of 2xnH samples neighboring the bottom-left, a sample adjacent to a top boundary of a current block and a total of 2xnW samples neighboring the top-right and one sample neighboring the top-left of a current block. Alternatively, neighboring reference samples of the current block may also include top neighboring samples of a plurality of columns and left neighboring samples of a plurality of rows. In addition, neighboring reference samples of the current block may also include a total of nH samples adjacent to a right boundary of a current block in a nWxnH size, a total of nW samples adjacent to a bottom boundary of a current block and one sample neighboring the bottom-right of a current block.

However, some of neighboring reference samples of a current block may not be decoded yet or may not be available. In this case, a decoder may configure neighboring reference samples which will be used for prediction by substituting unavailable samples with available samples. Alternatively, neighboring reference samples which will be used for prediction may be configured through interpolation of available samples.

When neighboring reference samples are derived, (i) a prediction sample may be derived based on the average or interpolation of neighboring reference samples of a current block, and (ii) the prediction sample may be derived based on a reference sample exising in a specific (prediction) direction for a prediction sample among neighboring reference samples of a current block. For (i), it may be called a non-directional mode or a non-angular mode and for (ii), it may be called a directional mode or an angular mode.

In addition, the prediction sample may be generated through interpolation between a first neighboring sample positioned in a prediction direction of an intra prediction mode of the current block based on a prediction sample of the current block and a second neighboring sample positioned in an opposite direction of the prediction direction among the neighboring reference samples. The above-described case may be called linear interpolation intra prediction (LIP). In addition, chroma prediction samples may be generated based on luma samples by using a linear model (LM). This case may be called a LM mode or a chroma component LM (CCLM) mode.

In addition, a temporary prediction sample of the current block may be derived based on filtered neighboring reference samples, and a prediction sample of the current block may be also derived by performing a weighted sum for the temporary prediction sample and at least one reference sample derived according to the intra prediction mode among the existing neighboring reference samples, i.e., unfiltered neighboring reference samples. The above-described case may be called Position dependent intra prediction (PDPC).

In addition, a reference sample line with the highest prediction accuracy among surrounding multiple reference sample lines of a current block may be selected to derive a prediction sample by using a reference sample positioned in a prediction direction on a corresponding line, and in this case, intra prediction encoding may be performed by indicating (signaling) a used reference sample line to a decoding device. The above-described case may be called multi-reference line intra prediction or MRL-based intra prediction.

In addition, intra prediction is performed based on the same intra prediction mode by dividing a current block into vertical or horizontal sub-partitions, but it may be used by deriving neighboring reference samples in a unit of the sub-partition. In other words, in this case, an intra prediction mode for a current block is equally applied to the sub-partitions, but intra prediction performance may be improved in some cases by deriving and using neighboring reference samples in a unit of the sub-partition. This prediction method may be called intra sub-partitions (ISP) based intra prediction.

The above-described intra prediction methods may be called an intra prediction type separately from an intra prediction mode. The intra prediction type may be called a variety of terms such as an intra prediction technique or an additional intra prediction mode, etc. For example, the intra prediction type (or additional intra prediction mode, etc.) may include at least one of LIP, PDPC, MRL and ISP described above. A general intra prediction method excluding a specific intra prediction type such as LIP, PDPC, MRL, ISP, etc. may be called a normal intra prediction type. A normal intra prediction type may be generally applied when a specific intra prediction type as above is not applied, and prediction may be performed based on the above-described intra prediction mode. Meanwhile, post-filtering for a derived prediction sample may be also performed, if necessary.

Specifically, an intra prediction procedure may include an intra prediction mode/type determination step, a neighboring reference sample derivation step, and an intra prediction mode/type-based prediction sample derivation step. In addition, a post-filtering step for a derived prediction sample may be also performed, if necessary.

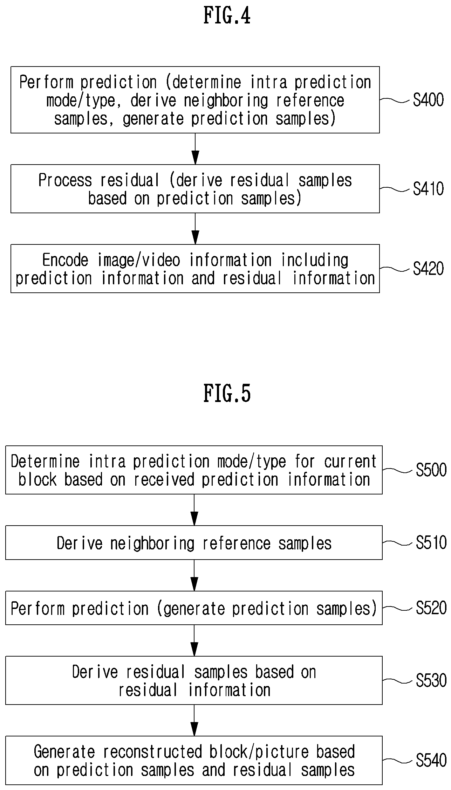

FIG. 4 shows an example of an intra prediction-based video/image encoding method to which an embodiment of the present disclosure may be applied.

Referring to FIG. 4, an encoding device performs intra prediction for a current block S400. An encoding device performs intra prediction for a current block S400. An encoding device may derive an intra prediction mode/type for a current block, derive neighboring reference samples of a current block and generate prediction samples within the current block based on the intra prediction mode/type and the neighboring reference samples. Here, a procedure for determining an intra prediction mode/type, deriving neighboring reference samples and generating prediction samples may be performed simultaneously or any one procedure may be performed before other procedures. An encoding device may determine a mode/type applied to the current block among a plurality of intra prediction modes/types. An encoding device may compare a RD cost for the intra prediction modes/types and determine an optimal intra prediction mode/type for the current block.

Meanwhile, an encoding device may perform a prediction sample filtering procedure. Prediction sample filtering may be called post filtering. Some or all of the prediction samples may be filtered by the prediction sample filtering procedure. In some cases, the prediction sample filtering procedure may be omitted.

An encoding device generates residual samples for the current block based on (filtered) prediction samples S410. An encoding device may compare the prediction samples based on a phase in original samples of a current block and derive the residual samples.

An encoding device may encode image information including information on the intra prediction (prediction information) and residual information on the residual samples S420. The prediction information may include the intra prediction mode information and the intra prediction type information. An encoding device may output encoded image information in a form of a bitstream. An output bitstream may be transmitted to a decoding device through a storage medium or a network.

The residual information may include a residual coding syntax which will be described later. An encoding device may transform/quantize the residual samples to derive quantized transform coefficients. The residual information may include information on the quantized transform coefficients.

Meanwhile, as described above, an encoding device may generate a reconstructed picture (including reconstructed samples and a reconstructed block). To this end, an encoding device may perform dequantization/inverse transform on the quantized transform coefficients again to derive (corrected) residual samples. The reason for performing dequantization/inverse transform again after transforming/quantizing residual samples in this way is to derive residual samples that are same as residual samples derived from a decoding device as described above. An encoding device may generate a reconstructed block including reconstructed samples for the current block based on the prediction samples and the (corrected) residual samples. A reconstructed picture for the current picture may be generated based on the reconstructed block. As described above, an in-loop filtering procedure, etc. may be further applied to the reconstructed picture.

FIG. 5 shows an example of an intra prediction-based video/image decoding method to which an embodiment of the present disclosure may be applied.

A decoding device may perform an operation corresponding to an operation performed by the encoding device.

Prediction information and residual information may be obtained from a bitstream. Based on the residual information, residual samples for a current block may be derived. Specifically, based on quantized transform coefficients derived based on the residual information, transform coefficients may be derived by performing dequantization, and inverse transform may be performed for the transform coefficients to derive residual samples for the current block.

Specifically, a decoding device may derive an intra prediction mode/type for a current block based on received prediction information (intra prediction mode/type information) S500. A decoding device may derive neighboring reference samples of the current block S510. A decoding device generates prediction samples within the current block based on the intra prediction mode/type and the neighboring reference samples S520. In this case, a decoding device may perform a prediction sample filtering procedure. Prediction sample filtering may be called post filtering. Some or all of the prediction samples may be filtered by the prediction sample filtering procedure. In some cases, a prediction sample filtering procedure may be omitted.

A decoding device generates residual samples for the current block based on received residual information S530. A decoding device may generate reconstructed samples for the current block based on the prediction samples and the residual samples and derive a reconstructed block including the reconstructed samples S540. A reconstructed picture for the current picture may be generated based on the reconstructed block. As described above, an in-loop filtering procedure, etc. may be further applied to the reconstructed picture.

The intra prediction mode information may include, for example, flag information (ex. intra_luma_mpm_flag) showing whether a most probable mode (MPM) or a retaining mode is applied to the current block, and when the MPM is applied to the current block, the prediction mode information may further include index information (ex. intra_luma_mpm_idx) indicating one of the intra prediction mode candidates (MPM candidates). The intra prediction mode candidates (MPM candidates) may be configured with a MPM candidate list or a MPM list. In addition, when the MPM is not applied to the current block, the intra prediction mode information may further include reminding mode information (ex. intra_luma_mpm_remainder) indicating one of the remaining intra prediction modes excluding the intra prediction mode candidates (MPM candidates). A decoding device may determine an intra prediction mode of the current block based on the intra prediction mode information.

In addition, the intra prediction type information may be implemented in various forms. As an example, the intra prediction type information may include intra prediction type index information indicating one of the intra prediction types. As another example, the intra prediction type information may include at least one of reference sample line information (ex. intra_luma_ref_idx) showing whether the MRL is applied to the current block and if applied, the order of a reference sample line used, ISP flag information (ex. intra_subpartitions_mode_flag) showing whether the ISP is applied to the current block, ISP type information (ex. intra_subpartitions_split_flag) indicating a partition type of sub-partitions when the ISP is applied, flag information showing whether PDCP is applied or flag information showing whether LIP is applied. In addition, the intra prediction type information may include a MIP flag showing whether matrix-based intra prediction (MIP) is applied to the current block.

The intra prediction mode information and/or the intra prediction type information may be encoded/decoded through a coding method described herein. For example, the intra prediction mode information and/or the intra prediction type information may be encoded/decoded through entropy coding (ex. CABAC, CAVLC) coding.

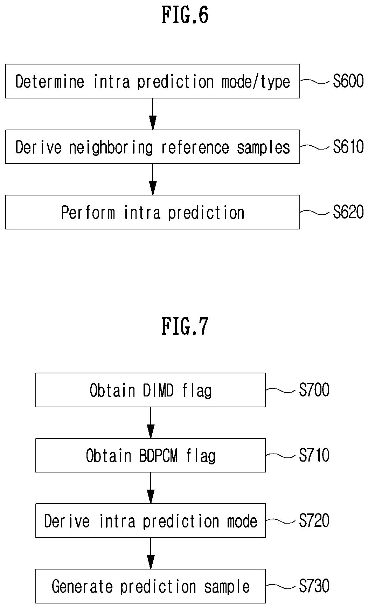

FIG. 6 exemplarily shows an intra prediction procedure to which an embodiment of the present disclosure may be applied.

Referring to FIG. 6, as described above, an intra prediction procedure may include an intra prediction mode/type determination step, a neighboring reference sample derivation step and an intra prediction performance (prediction sample generation) step. The intra prediction procedure may be performed in an encoding device and a decoding device as described above. Herein, a coding device may include an encoding device and/or a decoding device.

Referring to FIG. 6, a coding device determines an intra prediction mode/type S600.

An encoding device may determine an intra prediction mode/type applied to the current block among a variety of intra prediction modes/types described above and generate prediction-related information. The prediction-related information may include intra prediction mode information showing an intra prediction mode applied to the current block and/or intra prediction type information showing an intra prediction type applied to the current block. A decoding device may determine an intra prediction mode/type applied to the current block based on the prediction-related information.

The intra prediction mode information may include, for example, flag information (ex. intra_luma_mpm_flag) showing whether a most probable mode (MPM) or a retaining mode is applied to the current block, and when the MPM is applied to the current block, the prediction mode information may further include index information (ex. intra_luma_mpm_idx) indicating one of the intra prediction mode candidates (MPM candidates). The intra prediction mode candidates (MPM candidates) may be configured with a MPM candidate list or a MPM list. In addition, when the MPM is not applied to the current block, the intra prediction mode information may further include reminding mode information (ex. intra_luma_mpm_remainder) indicating one of the remaining intra prediction modes excluding the intra prediction mode candidates (MPM candidates). A decoding device may determine an intra prediction mode of the current block based on the intra prediction mode information.

In addition, the intra prediction type information may be implemented in various forms. As an example, the intra prediction type information may include intra prediction type index information indicating one of the intra prediction types. As another example, the intra prediction type information may include at least one of reference sample line information (ex. intra_luma_ref_idx) showing whether the MRL is applied to the current block and if applied, the order of a reference sample line used, ISP flag information (ex. intra_subpartitions_mode_flag) showing whether the ISP is applied to the current block, ISP type information (ex. intra_subpartitions_split_flag) indicating a partition type of sub-partitions when the ISP is applied, flag information showing whether PDCP is applied or flag information showing whether LIP is applied. In addition, the intra prediction type information may include a MIP flag showing whether matrix-based intra prediction (MIP) is applied to the current block.

**EP 4 436 168 A1**

For example, when intra prediction is applied, an intra prediction mode applied to a current block may be determined by using an intra prediction mode of a neighboring block. For example, a coding device may select one of MPM candidates in a most probable mode (MPM) list derived based on additional candidate modes and/or an intra prediction mode of a neighboring block (ex. a left and/or top neighboring block) of a current block based on a received MPM index, or may select one of the remaining intra prediction modes not included in the MPM candidates (and a planar mode) based on MPM remainder information (remaining intra prediction mode information). The MPM list may be configured to include or not include a planar mode as a candidate. For example, when the mpm list includes a planar mode as a candidate, the MPM list may have 6 candidates, and when the MPM list does not include a planar mode as a candidate, the mpm list may have 5 candidates. When the MPM list does not include a planar mode as a candidate, a not planar flag (ex. intra_luma_not_planar_flag) showing whether an intra prediction mode of a current block is not a planar mode may be signaled. For example, a MPM flag may be signaled first, and a MPM index and a not planar flag may be signaled when a value of a MPM flag is 1. In addition, the MPM index may be signaled when a value of the not planar flag is 1. Here, when the MPM list is configured not to include a planar mode as a candidate, it is not to confirm that the planar mode is not MPM m, but to confirm first whether it is a planar mode by signaling a flag (a not planar flag) before a planar mode is always considered as a MPM.

For example, whether an intra prediction mode applied to a current block is among MPM candidates (and a planar mode) or is in a remaining mode may be indicated based on a MPM flag (ex. intra_luma_mpm_flag). 1, a value of a MPM flag, may represent that an intra prediction mode for the current block is within MPM candidates (and a planar mode), and 0, a value of a MPM flag, may represent that an intra prediction mode for the current block is not within MPM candidates (and a planar mode). 상기 not planar flag (ex. 0, a value of the not planar flag (ex. intra_luma_not_planar_flag), may represent that an intra prediction mode for the current block is a planar mode, and 1, a value of the not planar flag, may represent that an intra prediction mode for the current block is not a planar mode. The MPM index may be signaled in a form of a mpm_idx or intra_luma_mpm_idx syntax element, and the remaining intra prediction mode information may be signaled in a form of a rem_intra_luma_pred_mode or intra_luma_mpm_remainder syntax element. For example, the remaining intra prediction mode information may index the remaining intra prediction modes not included in the MPM candidates (and a planar mode) among all intra prediction modes in prediction mode number order and indicate one of them. The intra prediction mode may be an intra prediction mode for a luma component (sample). Hereinafter, intra prediction mode information may include at least one of the MPM flag (ex. intra_luma_mpm_flag), the not planar flag (ex. intra_luma_not_planar_flag), the MPM index (ex. mpm_idx or intra_luma_mpm_idx) and the remaining intra prediction mode information (rem_intra_luma_pred_mode or intra_luma_mpm_remainder). Herein, a MPM list may be called a variety of terms such as a MPM candidate list, cand-ModeList, etc.

If MIP is applied to a current block, a separate mpm flag (ex. intra_mip_mpm_flag), mpm index (ex. intra_mip_mpm_idx) and remaining intra prediction mode information (ex. intra_mip_mpm_remainder) for MIP may be signaled, and the not planar flag may not be signaled.

In other words, generally, when block partition for an image is performed, a current block to be coded and a neighboring block have a similar image characteristic. Accordingly, there is a high probability that a current block and a neighboring block have the same or similar intra prediction mode. Accordingly, an encoder may use an intra prediction mode of a neighboring block to encode an intra prediction mode of a current block.

A coding device may configure a list of most probable modes (MPM) for a current block. The MPM list may be also referred to as a MPM candidate list. Here, MPM may refer to a mode used to improve coding efficiency by considering a similarity between a current block and a neighboring block in coding an intra prediction mode. As described above, a MPM list may be configured by including a planar mode, or may be configured by excluding a planar mode. For example, if a MPM list includes a planar mode, the number of candidates in a MPM list may be 6. And, if a MPM list does not include a planar mode, the number of candidates in a MPM list may be 5.

An encoding device may perform prediction based on a variety of intra prediction modes and determine an optimal intra prediction mode based on rate-distortion optimization (RDO) based thereon. In this case, an encoding device may use only MPM candidates and a planar mode configured in the MPM list to determine the optimal intra prediction mode, or may further use the remaining intra prediction modes as well as MPM candidates and a planar mode configured in the MPM list to determine the optimal intra prediction mode. Specifically, for example, if an intra prediction type of the current block is a specific type (e.g., LIP, MRL or ISP), not a normal intra prediction type, an encoding device may determine the optimal intra prediction mode by considering only the MPM candidates and the planar mode as intra prediction mode candidates for the current block. In other words, in this case, an intra prediction mode for the current block may be determined only among the MPM candidates and the planar mode, and in this case, the mpm flag may not be encoded/signaled. In this case, a decoding device may estimate that mpm flag is 1 without receiving separate signaling of mpm flag.

Meanwhile, in general, when an intra prediction mode of the current block is not a planar mode and is one of MPM candidates in the MPM list, an encoding device generates a mpm index (mpm idx) indicating one of the MPM candidates. If an intra prediction mode of the current block is not even in the MPM list, MPM remainder information (remaining intra prediction mode information) indicating a mode like an intra prediction mode of the current block among the remaining intra prediction modes not included in the MPM list (and the planar mode) is generated. The MPM remainder information may include, e.g., an intra_luma_mpm_remainder syntax element.

A decoding device obtains intra prediction mode information from a bitstream. As described above, the intra prediction mode information may include at least one of a MPM flag, a not planar flag, a MPM index and MPM remainder information (remaining intra prediction mode information). A decoding device may configure a MPM list. The MPM list is configured in the same way as a MPM list configured in the encoding device. In other words, the MPM list may include an intra prediction mode of a neighboring block, or may further include specific intra prediction modes according to a predetermined method.

A decoding device may determine an intra prediction mode of a current block based on the MPM list and the intra prediction mode information. As an example, when a value of the MPM flag is 1, a decoding device may derive a planar mode as an intra prediction mode of the current block or may derive a candidate indicated by the MPM index among MPM candidates in the MPM list (based on a not planar flag) as an intra prediction mode of the current block. Here, MPM candidates may represent only candidates included in the MPM list, or may include not only candidates included in the MPM list, but also a planar mode that may be applied when a value of the MPM flag is 1.

As another example, when a value of the MPM flag is 0, a decoding device may derive an intra prediction mode indicated by the remaining intra prediction mode information (which may be called mpm remainder information) among the remaining intra prediction modes not included in the MPM list and the planar mode as an intra prediction mode of the current block. Meanwhile, as another example, when an intra prediction type of the current block is a specific type (ex. LIP, MRL or ISP, etc.), a decoding device may derive a candidate indicated by the MPM flag in the planar mode or the MPM list as an intra prediction mode of the current block without parsing/decoding/checking the MPM flag.

A coding device derives neighboring reference samples of a current block S610. When intra prediction is applied to a current block, neighboring reference samples to be used for intra prediction of a current block may be derived. The neighboring reference samples of a current block may include a sample adjacent to a left boundary of a current block in a nWxnH size and a total of 2xnH samples neighboring the bottom-left, a sample adjacent to a top boundary of a current block and a total of 2xnW samples neighboring the top-right and one sample neighboring the top-left of a current block. Alternatively, neighboring reference samples of the current block may also include top neighboring samples of a plurality of columns and left neighboring samples of a plurality of rows. In addition, neighboring reference samples of the current block may also include a total of nH samples adjacent to a right boundary of a current block in a nWxnH size, a total of nW samples adjacent to a bottom boundary of a current block and one sample neighboring the bottom-right of a current block.

Meanwhile, when MRL is applied (i.e., when a value of a MRL index is greater than 0), the neighboring reference samples may be positioned on Line 1 to Line 2, not Line 0 adjacent to a current block, from a left/top side, and in this case, the number of neighboring reference samples may be further increased. Meanwhile, when ISP is applied, the neighboring reference samples may be derived in a unit of a sub-partition.

A coding device performs intra prediction for a current block to derive prediction samples S620. A coding device may derive the prediction samples based on the intra prediction mode/type and the neighboring samples. A coding device may derive a reference sample according to an intra prediction mode of the current block among neighboring reference samples of a current block, and may derive a prediction sample of the current block based on the reference sample.

FIG. 7 shows an image decoding method performed by a decoding device according to an embodiment of the present disclosure.

A decoding device (i.e., a decoder) may obtain a DIMD flag indicating whether decoder side intra mode derivation (DIMD) is applied to a current block S700. DIMD represents a mode that derives an intra prediction mode by using a reconstructed neighboring sample. As an embodiment, when DIMD is applied, at least one intra prediction mode may be derived from a reconstructed neighboring sample, and a predictor may be derived by using a derived intra prediction mode. In deriving an intra prediction mode, gradient calculation may be performed for reconstructed neighboring samples.

A predictor derived by using a derived intra prediction mode may be combined with a planar mode predictor. A weighted sum may be performed based on a predetermined weight. As an example, a DIMD flag may indicate whether DIMD is applied to a luma component of a current block. Alternatively, a DIMD flag may indicate whether DIMD is applied to at least one of a luma component or a chroma component of a current block.

In addition, as an embodiment, a DIMD-derived intra prediction mode may be included in a Most Probable Mode (MPM) list. A DIMD process may be performed before configuring a MPM list. As an example, a derived intra prediction mode of a block to which DIMD is applied may be stored with a block and may be used to configure a MPM list of an adjacent block. In the present disclosure, the DIMD may be referred to as an intra derivation mode or an intra prediction mode derivation mode, and a DIMD flag may be referred to as an intra derivation mode flag, an intra prediction mode derivation mode flag, a first flag, etc.

A decoding device may obtain a BDPCM flag indicating whether Block Differential Pulse Coded Modulation (BDPCM) is applied to a chroma component of a current block based on a DIMD flag S710. In the present disclosure, the BDPCM flag may be referred to as a BDPCM chroma flag, a chroma BDPCM flag, a second flag, etc.

BDPCM according to the present disclosure may be performed in a quantized residual domain. A quantized residual domain may include a quantized residual signal (or quantized residual coefficients), and when BDPCM is applied, transform to a quantized residual signal may be skipped. In other words, when BDPCM is applied, transform may be skipped and quantization may be applied to residual samples. Alternatively, a quantized residual domain may include quantized transform coefficients. BDPCM may be applied to a luma component or may be applied to a chroma component.

When BDPCM is applied to a current block, a predicted block (a prediction block) including predicted samples of a current block may be generated by intra prediction. In this case, an intra prediction mode for performing intra prediction may be signaled through a bitstream or may be derived based on a prediction direction of BDPCM described later. In addition, in this case, an intra prediction mode may be determined as one of a vertical prediction direction mode or a horizontal prediction direction mode.

For example, when a prediction direction of BDPCM is horizontal, an intra prediction mode may be determined as a horizontal prediction direction mode and a prediction block of a current block may be generated by intra prediction in a horizontal direction. Alternatively, when a prediction direction of BDPCM is vertical, an intra prediction mode may be determined as a vertical prediction direction mode and a prediction block of a current block may be generated by intra prediction in a vertical direction. When intra prediction in a horizontal direction is applied, a value of a pixel adjacent to the left of a current block may be determined as a predicted sample value of samples included in a corresponding row of a current block. When intra prediction in a vertical direction is applied, a value of a pixel adjacent to the top of a current block may be determined as a predicted sample value of samples included in a corresponding column of a current block. When BDPCM is applied to a current block, a method of generating a prediction block of a current block may be performed in the same way in an image encoding device and an image decoding device.

When BDPCM is applied to a current block, an image encoding device may generate a residual block including residual samples of a current block by subtracting the prediction block from a current block. After quantizing the residual block, an image encoding device may encode a difference value (a difference or a delta) between a quantized residual sample and a predictor of a corresponding quantized residual sample. An image decoding device may generate a quantized residual block of a current block by obtaining a quantized residual sample of a current block based on a predictor and a difference value reconstructed from a bitstream. Afterwards, an image decoding device may reconstruct a current block by dequantizing a quantized residual block and adding it to the prediction block.

In an embodiment, BDPCM may be activated at at least one level of a sequence, a picture and a slice. A BDPCM activation flag indicating whether to activate BDPCM may be signaled at a level of a sequence parameter set (SPS), a picture parameter set (PPS) and a slice header. In addition, as an example, a BDPCM activation flag may be signaled only when a transform skip mode is activated at a level of a sequence, a picture and a slice.

If BDPCM is activated, a CU size is smaller than or equal to MaxTsSize by MaxTsSize in terms of a luma sample and a CU is intra-coded, a predetermined flag may be transmitted at a CU level. Here, MaxTsSize represents the maximum block size for which transform skip is allowed. The predetermined flag may represent whether regular intra coding or BDPCM is used. When BDPCM is used, a BDPCM prediction direction flag for indicating whether BDPCM prediction is in a horizontal direction or in a vertical direction may be signaled. Afterwards, prediction for a current block may be performed by using a horizontal or vertical intra prediction process with an unfiltered reference sample. A residual signal of a current block may be quantized, a difference between each quantized residual and a predictor may be coded and the predictor may be a previously coded residual at a neighboring position horizontally or vertically (according to a BDPCM prediction direction).

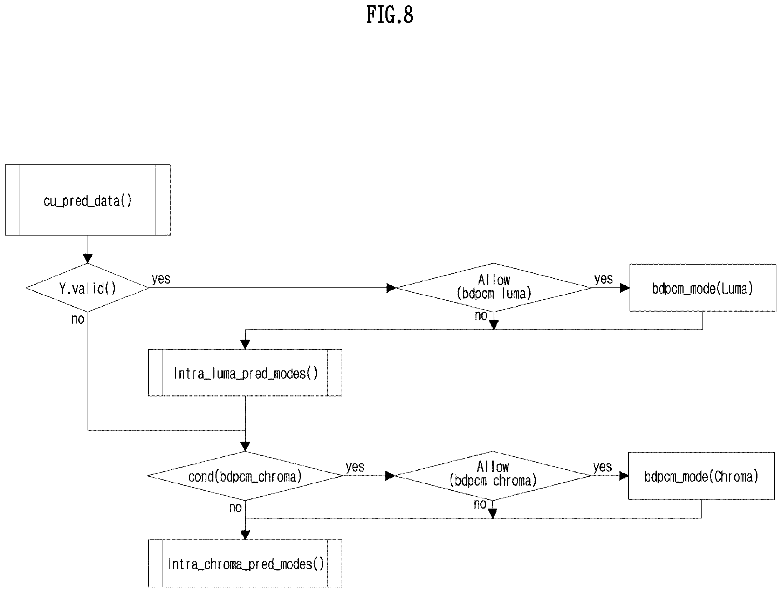

According to an embodiment of the present disclosure, a BDPCM flag indicating whether BDPCM is applied to a chroma component of a current block may be obtained (or parsed) from a bitstream based on whether a predefined condition is satisfied. As an example, the predefined condition may include a condition related to whether DIMD is applied to a current block (or a DIMD flag). It is described later in detail by referring to FIG. 8.

A decoding device may derive an intra prediction mode of a chroma component based on a BDPCM flag S720. As an embodiment, when a BDPCM flag indicates that BDPCM is not applied to the chroma component, a chroma prediction mode index indicating an intra prediction mode of the chroma component among a plurality of intra prediction modes may be signaled. In other words, when BDPCM is not applied, general intra coding may be applied and an intra prediction mode derivation process for a chroma component may be performed.

In addition, as an embodiment, DIMD may be applied to a chroma component. As an example, a chroma DIMD flag indicating whether DIMD is applied to a chroma component may be signaled. Alternatively, as another example, a chroma DIMD mode representing a DIMD mode applied to a chroma component may be included in a chroma intra prediction mode group for chroma intra prediction. In this case, the plurality of intra prediction modes may include a chroma DIMD mode that derives a chroma intra prediction mode by using a reconstructed neighboring sample. In the present disclosure, a chroma DIMD mode may be referred to as a chroma intra derivation mode or a chroma intra prediction mode derivation mode.

In addition, when a BDPCM flag indicates that the BDPCM is applied to a chroma component, flag information indicating a prediction direction of BDPCM (referred to as a BDPCM prediction direction flag) may be signaled as described above. An intra prediction mode may be determined (or derived) according to a BDPCM prediction direction flag. When BDPCM is applied, an intra prediction mode may be determined as any one of a vertical mode or a horizontal mode. Alternatively, when BDPCM is applied, an intra prediction mode may be determined as a mode corresponding to a BDPCM prediction direction among a plurality of predefined prediction modes. There may be at least three BDPCM prediction directions, and in this case, index information indicating a BDPCM prediction direction may be signaled.

A decoding device may generate a prediction sample of a chroma component based on a derived intra prediction mode S730. In other words, a prediction sample (or a predictor) may be generated by using a neighboring reference sample according to a prediction direction of an intra prediction mode.

FIG. 8 is a diagram illustrating an intra prediction mode derivation process for a color component according to an embodiment of the present disclosure.

Referring to FIG. 8, a decoding device may perform an intra prediction mode derivation process for a component. A flowchart shown in FIG. 8 is an example, and an embodiment of the present disclosure is not limited thereto. Some steps may be omitted, and a step not shown in FIG. 8 may be added.

A decoding device may check whether a current component is a luma component or a chroma component. For a luma component, a decoding device checks whether BDPCM is applied to a luma component, and according to a check result, it may perform BDPCM or may perform general intra coding. In other words, a decoding device may derive an intra prediction mode and perform intra prediction based on a derived intra prediction mode. As an example, a method previously described in FIGS. 4 to 6 may be applied. A decoding device may obtain a BDPCM luma flag indicating whether BDPCM is applied to a luma component and check whether BDPCM is applied to a luma component based on the BDPCM luma flag.

For a chroma component, a decoding device checks whether BDPCM is applied to a chroma component, and according to a check result, it may perform BDPCM or may perform general intra coding. A decoding device may obtain a BDPCM chroma flag indicating whether BDPCM is applied to a chroma component, and check whether BDPCM is applied to a chroma component based on the BDPCM chroma flag. In this case, a decoding device may check whether a predefined condition is satisfied and, according to a check result, it may obtain (or parse) the BDPCM chroma flag from a bitstream.

In an embodiment, prior to an intra prediction mode derivation process shown in Table 8, a DIMD flag indicating whether DIMD is applied to a current block may be parsed. A DIMD flag may indicate whether DIMD is applied to at least one component of a luma component or a chroma component of a current block. Prior to parsing a DIMD flag, whether a predefined condition is satisfied may be checked. For example, when a current coding unit is intra prediction, a current component is a luma component and DIMD is activated at a current sequence level, a DIMD flag may be parsed.

According to the prior art, despite relevance between color components according to a tree type, there is a problem that a BDPCM chroma flag must be signaled unnecessarily. Below, a method for efficiently signaling the BDPCM chroma flag is described. Prior to this, Table 1 below is an example of a syntax for explaining the above-described problem occurring in BDPCM chroma flag signaling.

[Table 1]

| coding_unit( x0, y0, cbWidth, cbHeight, cqtDepth, treeType, modeType ) { | **Descriptor** |
|---|---|
| if( sh_slice_type = = I && (cbWidth>64 \|\| cbHeight > 64 ) ) | |
| modeType = MODE_TYPE_INTRA | |
| chType = treeType = = DUAL_TREE_CHROMA ? 1 : 0 | |
| if( sh_slice_type != I \|\| sps_ibc_enabled_flag ) { | |
| if( treeType != DUAL_TREE_CHROMA && <br> ( ( !( cbWidth = = 4 && cbHeight = = 4) && <br> modeType != MODE_TYPE_INTRA) \|\| <br> (sps_ibc_enabled_flag && cbWidth <= 64 && cbHeight <= 64))) | |
| **cu_skip_flag[** x0 ][ y0 ] | ae(v) |
| if( cu_skip_flag[ x0 ][ y0 ] == 0 && sh_slice_type != I && <br> !(cbWidth = = 4 && cbHeight = = 4) && modeType = = | |

(continued)

| | |
|---|---|
| MODE_TYPE_ALL ) | |
| **pred_mode_flag** | ae(v) |
| if((( sh_slice_type = = I && cu_skip_flag[ x0 ][ y0 ] = =0 ) \|\| (sh_ slice_type != I && ( CuPredMode [ chType ][ x0 ][ y0 ] != MODE_INTRA \|\| ( ( ( cbWidth = = 4 && cbHeight = = 4) \|\| modeType = = MODE_TYPE_INTRA) && cu_skip_flag[ x0 ][ y0 ] = = 0)))) && cbWidth <= 64 && cbHeight <= 64 && modeType != MODE_TYPE_INTER && sps_ibc_enabled_flag && treeType != DUAL_TREE_CHROMA) | |
| **pred_mode_ibc_flag** | ae(v) |
| } | |
| if( CuPredMode[ chType ][ x0 ][ y0 ] = = MODE_INTRA && sps_palette_enabled_flag && cbWidth <= 64 && cbHeight <= 64 && cu skip_flag[ x0 ][ y0 ] = = _ 0 && modeType != MODE_TYPE_INTER && ( ( cbWidth * cbHeight ) > (treeType != DUAL_TREECHROMA ? 16 : 16 * SubWidthC * SubHeightC ) ) _ && (modeType != MODE_TYPE_INTRA \|\| treeType != DUAL_TREE_CHROMA ) ) | |
| **pred mode_plt flag** | ae(v) |
| if(CuPredMode [chType][x0][y0] == MODE_INTRA && treeType = = SINGLE_TREE \|\| treeType = = DUAL_TREE_LUMA && sps_dimd_flag) | |
| { | |
| **dimd_flag** | ae(v) |
| } | |
| if( CuPredMode[ chType ][ x0 ][ y0 ] - - MODE_INTRA && sps_act_enabled_flag && treeType = = SINGLE_TREE) | |
| **cu_act_enabled_flag** | ae(v) |
| if( CuPredMode[ chType ][ x0 ][ y0 ] = = MODE_INTRA \|\| CuPredMode[ chType ][ x0 ][y0] = = MODE_PLT) { | |
| if( treeType = = SINGLE_TREE \|\| treeType = = DUAL_TREE_LUMA) { | |
| if( pred_mode_plt_flag) | |
| palette_coding( x0, y0, cbWidth, cbHeight, treeType ) | |
| else { | |
| if( sps bdpcm enabled flag && cbWidth <= MaxTsSize && cbHeight <= MaxTsSize && !dimd_flag[x0][y0] ) | |

| | |
|---|---|
| **intra_bdpcm_luma_flag** | ae(v) |
| if( intra_bdpcm_luma_flag ) | |

| | |
|---|---|
| **intra_bdpcm_luma_dir_flag** | ae(v) |
| else { | |
| if( sps_mip_enabled_flag) | |
| **intra_mip_flag**[ x0 ][ y0 ] | ae(v) |
| if( intra_mip_flag[ x0 ][ y0 ] ) { | |
| **intra_mip _transposed_flag**[ x0 ][ y0 ] | ae(v) |
| **intra_mip_mode**[ x0 ][ y0 ] | ae(v) |
| } else { | |
| if( sps_mrl_enabled_flag && ( ( y0 % CtbSizeY) > 0 ) ) | |
| **intra_hima_ref_idx**[ x0 ][ y0 ] | ae(v) |
| if( sps_isp_enabled_flag && intra_luma-ref_idx[ x0 ][ y0 ] = = 0 && (cbWidth <= MaxTbSizeY && cbHeight <= MxTbSizeY) && (cbWidth * cbHeight > MinTbSizeY * MinTbSizeY) && !cu_act_enabled_flag) | |
| **intra_subpartitions_mode_flag**[ x0 ][ y0 ] | ae(v) |
| if( intra_subpartitions_mode_flag[ x0 ][ y0 ] = = 1) | |
| **intra subpartitions split_flag**[ x0 ][ y0 ] | ae(v) |
| if( intra_luma_ref_idx[ x0 ][ y0 ] = = 0) | |
| **intra luma mpm_flag**[ x0 ][ y0 ] | ae(v) |
| if( intra_luma_mpm_flag[ x0 ][ y0 ] ) { | |
| if( intra_luma_ref_idx[ x0 ][ y0 ] = = 0 ) | |
| **intra_luma_not_planar_flag[** x0 ][ y0 ] | ae(v) |
| if( intra_luma_not_planar_flag[ x0 ][ y0 ]) | |
| **intra_luma_mpm_idx**[ x0 ][ y0 ] | ae(v) |
| } else | |
| **intra_luma_mpm_remainder[** x0 ][ y0 ] | ae(v) |
| } | |
| } | |
| } | |
| } | |
| iff (treeType == SINGLE_TREE || tree Type == DUAL_TREE_CHROMA) && sps_chroma_format_idc != 0) { | |
| if( pred_mode_plt_flag && treeType = = DUAL_TREE_CHROMA) | |
| palette_coding( x0, y0, cbWidth / SubWidthC, cbHeight / SubHeightC, treeType) | |
| else if( !pred_mode_plt_flag) { | |
| if( !cu_act_enabled_flag) { | |
| if( cbWidth / SubWidthC <= MaxTsSize && cbHeight / SubHeightC <= MaxTsSize | |

(continued)

| | |
|---|---|
| && sps_bdpcm_enabled flag) | |
| **intra_bdpcm_chroma_flag** | ae(v) |
| if( intra_bdpcm_chroma_flag) | |
| **intra_bdpcm_chroma_dir_flag** | ae(v) |
| else { | |
| if( CclmEnabled ) | |
| **cclm_mode_flag** | ae(v) |

| | |
|---|---|
| if( cclm_mode_flag ) | |
| **cclm_mode_idx** | ae(v) |
| else | |
| **intra_chroma_ pred_mode** | ae(v) |
| } | |
| } | |
| } | |
| } | |

Referring to Table 1, when a current coding unit is intra prediction (CuPredMode[chType] [x0] [y0] == MODE_INTRA), a tree type is a single tree or dual tree luma (treeType == SINGLE_TREE || treeType == DUAL_TREE_LUMA) and DIMD is activated for a current sequence (sps_dimd_flag == 1), a DIMD flag (i.e., a syntax element, dimd_flag) may be parsed.

In parsing a syntax element intra_bdpcm_luma_flag indicating whether BDPCM is applied to a luma component, whether a predefined condition is satisfied may be checked. As in Table 1, when BDPCM is activated for a current sequence by checking a value of sps_bdpcm_enabled_flag, both a width and a height of a current coding unit are smaller than MaxTsSize and a DIMD flag is 0, intra_bdpcm_luma_flag may be parsed. Here, MaxTsSize may represent the maximum block size for which transform skip is allowed.

On the other hand, according to the prior art, in parsing a syntax element intra_bdpcm_chroma_flag indicating whether it is applied to a chroma component, a DIMD flag may not be considered. In other words, as in Table 1, when BDPCM is activated for a current sequence by checking a value of sps_bdpcm_enabled_flag and both a width and a height of a current chroma component are smaller than MaxTsSize, intra_bdpcm_chroma_flag may be parsed.

Specifically, for a dual tree type, in the process of encoding a luma channel (a luma component), a DIMD flag may be transmitted before signaling an intra prediction mode for a luma component and a BDPCM flag for a luma component. If a DIMD flag is 1, a BDPCM flag for a luma component may not be transmitted. In the process of encoding a chroma channel (a chroma component), a DIMD flag is not signaled, and signaling of a BDPCM flag for a chroma component and an intra prediction mode for a chroma component may be performed.

For a single tree type, a DIMD flag may be signaled before signaling an intra prediction mode and a BDPCM flag of a luma component. If a DIMD flag is 1, a BDPCM flag for a luma component may not be transmitted. On the other hand, a BDPCM flag for a chroma component may be signaled regardless of a DIMD flag.

In a single tree type, when it is assumed that intra prediction for luma and chroma is performed based on a DIMD flag, if a BDPCM flag for a chroma component is signaled in any case regardless of a DIMD flag as described above, unnecessary bit signaling may be generated, leading to compression performance degradation. In a single tree, when a DIMD flag is 1, a DIMD mode may be derived by considering all information of a luma and chroma component, so the result of determining whether to apply BDPCM to a luma and chroma component according to a DIMD flag value may be the same.

Accordingly, in an embodiment of the present disclosure, a method for applying chroma component BDPCM considering DIMD is proposed. In other words, according to an embodiment of the present disclosure, a BDPCM chroma flag may be signaled if a condition is satisfied by checking a condition considering a DIMD flag. In a single tree type, if a DIMD flag is 1, BDPCM chroma information may not be signaled. Table 2 below illustrates a syntax table according to a proposed method.

[Table 2]

| coding_unit( x0, y0, cbWidth, cbHeight, cqtDepth, treeType, modeType ) { | Descriptor |
|---|---|
| if( sh_slice_type = = I && ( cbWidth > 64 \|\| cbHeight > 64 ) ) | |
|    modeType = MODE_TYPE_INTRA | |
| chType = treeType = = DUAL_TREE_CHROMA ? 1 : 0 | |
| if( sh_slice_type != I \|\| sps_ibc_enabled_flag ) { | |
|   if( treeType != DUAL_TREE_CHROMA && <br>     ( ( !( cbWidth = = 4 && cbHeight = = 4) && <br>     modeType != MODE_TYPE_INTRA ) \|\| <br>     (sps_ibc_enabled_flag && cbWidth <= 64 && cbHeight <= 64))) | |
|     **cu_skip_flag**[ x0 ][y0] | ae(v) |
|   if( cu_skip_flag[ x0 ][ y0 ] == 0 && sh_slice_type != I && <br>     !( cb Width = = 4 && cbHeight = = 4) && modeType = = MODE_TYPE_ALL ) | |
|     **pred_mode_flag** | ae(v) |
|   if( (( sh_slice_type = = I && cu_skip_flag[ x0 ][ y0 ] = =0 ) \|\| <br>     ( sh_slice_type != I && ( CuPredMode[ chType ][ x0 ][ y0 ] != MODE_INTRA \| \| <br>     ( ( ( cbWidth = = 4 && cbHeight = = 4) \|\| modeType = = MODE_TYPE_INTRA) <br>      && cu_skip_flag[ x0 ][ y0 ] = = 0)))) && <br>     cbWidth <= 64 && cbHeight <= 64 && modeType != MODE_TYPE_INTER && <br>     sps_ibc_enabled_flag && treeType != DUAL_TREE_CHROMA) | |
|     **pred_mode_ibc_flag** | ae(v) |
|   } | |
|   if( CuPredMode [ chType ][ x0 ][ y0 ] = = MODE_INTRA && <br> sps_palette_enabled_flag && <br>     cbWidth <= 64 && cbHeight <= 64 && cu_skip_flag[ x0 ][ y0 ] = = 0 && <br>     modeType != MODE_TYPE_INTER && (( cbWidth * cbHeight) > <br>     (treeType != DUAL_TREE_CHROMA ? 16 : 16 * SubWidthC * SubHeightC ) ) && <br>     (modeType != MODE_TYPE_INTRA \|\| treeType != DUAL_TREE_CHROMA) ) | |
|     **pred_mode_plt_flag** | ae(v) |
|   if(CuPredMode [chType] [x0] [y0] == MODE_INTRA && treeType = = SINGLE_TREE \|\| treeType = = DUAL_TREE_LUMA && sps_dimd_flag) | |
|   { | |
|     **dimd_flag** | ae(v) |
|   } | |
|   if( CuPredMode[ chType ][ x0 ][ y0 ] = = MODE_INTRA && sps_act_enabled_flag && <br>     tree Type = = SINGLE_TREE) | |
|     **cu_act enabled flag** | ae(v) |
|   if( CuPredMode[ chType ][ x0 ][ y0 ] = = MODE_INTRA \|\| <br>     CuPredMode [ chType ][ x0 ][y0] = = MODE_PLT) { | |
|     if( treeType = = SINGLE_TREE \|\| treeType = = DUAL_TREE_LUMA) { | |
|     if( pred_mode_plt_flag) | |

| | |
|---|---|
| palette_coding( x0, y0, cbWidth, cbHeight, treeType ) | |
| else { | |
| if( sps_bdpcm_enabled_flag && <br> cbWidth <= MaxTsSize && cbHeight <= MaxTsSize && **!dimd_flag** **[x0][y0]** ) | |
| **intra_bdpcm_luma_flag** | ae(v) |
| if( intra_bdpcm_luma_flag ) | |
| **intra_bdpcm_luma_dir_flag** | ae(v) |
| else { | |
| if( sps_mip_enabled_flag ) | |
| **intra_mip_flag**[ x0 ][ y0 ] | ae(v) |
| if( intra_mip_flag[ x0 ][ y0 ] ) { | |
| **intra_mip_transposd_flag**[ x0 ][ y0 ] | ae(v) |
| **intra_mip_mode**[ x0 ][ y0 ] | ae(v) |
| } else { | |
| if( sps_mrl_enabled_flag && (( y0 % CtbSizeY) > 0 )) | |
| **intra_hima_ref_idx**[ x0 ][ y0 ] | ae(v) |
| if( sps_isp_enabled_flag && intra_luma_ref_idx[ x0 ][ y0 ] = = 0 && <br> (cbWidth <= MaxTbSizeY && cbHeight <= MaxTbSizeY) && <br> (cbWidth * cbHeight > MinTbSizeY * MinTbSizeY ) && <br> !cu_act_enabled_flag) | |
| **intra_subpartitions_mode_flag**[ x0 ][ y0 ] | ae(v) |
| if( intra_subpartitions_mode_flag[ x0 ][ y0 ] = = 1) | |
| **intra_subpartitions_split_flag**[ x0 ][ y0 ] | ae(v) |
| if( intra_luma_ref_idx[ x0 ][ y0 ] = = 0) | |
| **intra_luma_mpm_flag**[ x0 ][ y0 ] | ae(v) |
| if( intra_luma_mpm_flag[ x0 ][ y0 ] ) { | |
| if( intra_luma_ref_idx[ x0 ][ y0 ] = = 0 ) | |
| **intra_luma_not_planar_flag[** x0 ][ y0 ] | ae(v) |
| if( intra_luma_not_planar_flag[ x0 ][ y0 ] ) | |
| **intra_luma_mpm_idx**[ x0 ][ y0 ] | ae(v) |
| } else | |
| **intra_luma_mpm_remainder**[ x0 ][ y0 ] | ae(v) |
| } | |
| } | |
| } | |
| } | |
| if((treeType == SINGLE_TREE || tree Type == DUAL_TREE_CHROMA) && <br> sps_chroma_format_idc != 0 ) { | |

(continued)

| | |
|---|---|
| if( pred_mode_plt_flag && treeType = = DUAL_TREE_CHROMA) | |
| palette_coding( x0, y0, cbWidth / SubWidthC, cbHeight / SubHeightC, treeType) | |
| else if( !pred_mode_plt_flag) { | |
| if( !cu_act_enabled_flag) { | |
| if( cbWidth / SubWidthC <= MaxTsSize && cbHeight / SubHeightC <= MaxTsSize<br>&& sps_bdpcm_enabled _flag && !dimd[x0][y0]) | |
| **intra_bdpcm_chroma_flag** | ae(v) |

| | |
|---|---|
| if( intra_bdpcm_ chroma_flag ) | |
| **intra_bdpcm_ chroma_dir_flag** | ae(v) |
| else { | |
| if( CclmEnabled ) | |
| **cclm_mode_flag** | ae(v) |
| if( cclm_mode_flag) | |
| **cclm_mode_idx** | ae(v) |
| else | |
| **intra_chroma_ pred_mode** | ae(v) |
| } | |
| } | |
| } | |
| } | |

Referring to Table 2, when a current coding unit is intra prediction (CuPredMode[chType] [x0] [y0] == MODE_INTRA), a tree type is a single tree or dual tree luma (treeType == SINGLE_TREE || treeType == DUAL_TREE_LUMA) and DIMD is activated for a current sequence (sps_dimd_flag == 1), a DIMD flag (i.e., a syntax element, dimd_flag) may be parsed.

In parsing a syntax element intra_bdpcm_luma_flag indicating whether BDPCM is applied to a luma component, whether a predefined condition is satisfied may be checked. As in Table 2, when BDPCM is activated for a current sequence by checking a value of sps_bdpcm_enabled_flag, both a width and a height of a current coding unit are smaller than MaxTsSize and a DIMD flag is 0, intra_bdpcm_luma_flag may be parsed. Here, MaxTsSize may represent the maximum block size for which transform skip is allowed.

In parsing a syntax element intra_bdpcm_chroma_flag indicating whether it is applied to a chroma component, whether a predefined condition is satisfied may be checked. As in Table 2, when BDPCM is activated for a current sequence by checking a value of sps_bdpcm_enabled_flag, both a width and a height of a current chroma component are smaller than MaxTsSize and a DIMD flag is 0, intra_bdpcm_chroma_flag may be parsed.

As in a syntax in Table 2, a decoding step may be simplified by making encoding conditions for BDPCM luma equal to those for BDPCM chroma, and compression efficiency may be improved by reducing transmitted bits.

Referring to FIG. 8 again, according to an embodiment of the present disclosure, a condition for BDPCM chroma in FIG. 8 may be defined as in Equation 1 below.

[Equation 1]

$$(!Y.valid() \mid\mid (!DualTree \&\& Y.valid())) \&\&$$

$$chromaEnabled(format)$$

Referring to Equation 1, when 1) a luma component is invalid or a luma component is valid and is a single tree and 2) coding for a chroma component is activated, a condition for BDPCM chroma in FIG. 8 may be satisfied.

As described above, a BDPCM chroma flag may be parsed based on whether a predefined condition related to DIMD is satisfied. As an example, a BDPCM chroma flag may be parsed only when a tree type of a current block is a single tree and a DIMD flag indicates that DIMD is not applied to a current block. For example, in FIG. 8, a condition for applying (or allowing) BDPCM chroma may be defined as in Equation 2 below.

sps.useBDPCM && isINTRA() && W <= trSKIPSize && H < trSkipSize && ((!dimd && SingleTree) || DualTree)

[Equation 2]

Referring to Equation 2, when 1) BDPCM is activated in a current sequence, 2) it is intra prediction, 3) a width and a height of a current block are smaller than or equal to the maximum transform skip size and 4) it is a single tree type and DIMD is not applied or it is a dual tree type, a condition for applying BDPCM chroma may be satisfied. If a condition for applying BDPCM chroma is satisfied, a BDPCM chroma flag may be parsed.

Alternatively, as another example, a BDPCM chroma flag may be parsed only when a DIMD flag indicates that DIMD is not applied to a current block. In FIG. 8, a condition for applying (or allowing) BDPCM chroma may be defined as in Equation 3 below.

[Equation 3]

$$sps.useBDPCM \&\& isIntra() \&\& W <= trSkipSize \&\& H < trSkipSize$$

$$\&\& !dimd$$

Referring to Equation 3, when 1) BDPCM is activated in a current sequence, 2) it is intra prediction, 3) a width and a height of a current block are smaller than or equal to the maximum transform skip size and 4) DIMD is not applied, a condition for applying BDPCM chroma may be satisfied. If a condition for applying BDPCM chroma is satisfied, a BDPCM chroma flag may be parsed.

As an embodiment, if a BDPCM chroma flag is not parsed from a bitstream, a BDPCM chroma flag may be inferred to be a predefined value. For example, the predefined value may be 0 or 1.

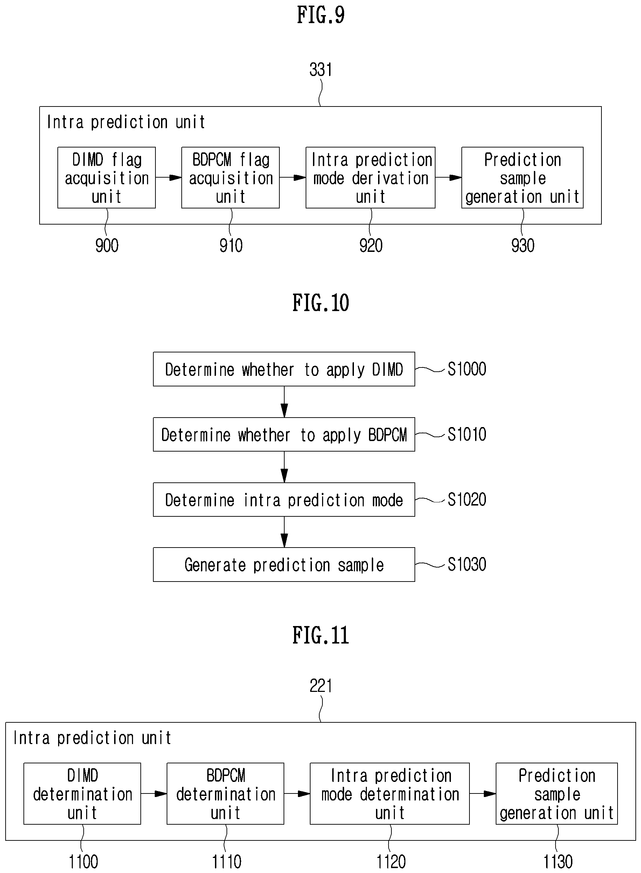

FIG. 9 shows a rough configuration of an intra predictor that performs an image decoding method according to an embodiment of the present disclosure.

Referring to FIG. 9, an intra predictor 331 may include a DIMD flag acquisition unit 900, a BDPCM flag acquisition unit 910, an intra prediction mode derivation unit 920 and a prediction sample generator 930.

A DIMD flag acquisition unit 900 may obtain a DIMD flag indicating whether decoder side intra mode derivation (DIMD) is applied to a current block. As an embodiment, when DIMD is applied, at least one intra prediction mode may be derived from a reconstructed neighboring sample, and a predictor may be derived by using a derived intra prediction mode. In deriving an intra prediction mode, gradient calculation may be performed for reconstructed neighboring samples.

A predictor derived by using a derived intra prediction mode may be combined with a planar mode predictor. A weighted sum may be performed based on a predetermined weight. As an example, a DIMD flag may indicate whether DIMD is applied to a luma component of a current block. Alternatively, a DIMD flag may indicate whether DIMD is applied to at least one of a luma component or a chroma component of a current block.

In addition, as an embodiment, a DIMD-derived intra prediction mode may be included in a Most Probable Mode (MPM) list. A DIMD process may be performed before configuring a MPM list. As an example, a derived intra prediction mode of a block to which DIMD is applied may be stored with a block and may be used to configure a MPM list of an adjacent block. In the present disclosure, the DIMD may be referred to as an intra derivation mode or an intra prediction mode derivation mode, and a DIMD flag may be referred to as an intra derivation mode flag, an intra prediction mode derivation mode flag, a first flag, etc.

A BDPCM flag acquisition unit 910 may obtain a BDPCM flag indicating whether Block Differential Pulse Coded Modulation (BDPCM) is applied to a chroma component of a current block based on a DIMD flag. In the present disclosure, the BDPCM flag may be referred to as a BDPCM chroma flag, a chroma BDPCM flag, a second flag, etc. An embodiment previously described in FIGS. 7 and 8 may be applied in the same manner, and an overlapping description is omitted.

An intra prediction mode derivation unit 920 may derive an intra prediction mode of a chroma component based on a BDPCM flag. As an embodiment, when a BDPCM flag indicates that BDPCM is not applied to the chroma component, a chroma prediction mode index indicating an intra prediction mode of the chroma component among a plurality of intra prediction modes may be signaled. In other words, when BDPCM is not applied, general intra coding may be applied and an intra prediction mode derivation process for a chroma component may be performed.

In addition, as an embodiment, DIMD may be applied to a chroma component. As an example, a chroma DIMD flag indicating whether DIMD is applied to a chroma component may be signaled. Alternatively, as another example, a chroma DIMD mode representing a DIMD mode applied to a chroma component may be included in a chroma intra prediction mode group for chroma intra prediction. In this case, the plurality of intra prediction modes may include a chroma DIMD mode that derives a chroma intra prediction mode by using a reconstructed neighboring sample. In the present disclosure, a chroma DIMD mode may be referred to as a chroma intra derivation mode or a chroma intra prediction mode derivation mode.

In addition, when a BDPCM flag indicates that the BDPCM is applied to a chroma component, flag information indicating a prediction direction of BDPCM (referred to as a BDPCM prediction direction flag) may be signaled as described above. An intra prediction mode may be determined (or derived) according to a BDPCM prediction direction flag. When BDPCM is applied, an intra prediction mode may be determined as any one of a vertical mode or a horizontal mode. Alternatively, when BDPCM is applied, an intra prediction mode may be determined as a mode corresponding to a BDPCM prediction direction among a plurality of predefined prediction modes. There may be at least three BDPCM prediction directions, and in this case, index information indicating a BDPCM prediction direction may be signaled.

A prediction sample generator 930 may generate a prediction sample of a chroma component based on a derived intra prediction mode. In other words, a prediction sample generator 930 may generate a prediction sample (or a predictor) by using a neighboring reference sample according to a prediction direction of an intra prediction mode.

FIG. 10 shows an image encoding method performed by an encoding device according to an embodiment of the present disclosure.

Hereinafter, an image decoding method described by referring to FIGS. 7 to 9 above may be applied equally/similarly to an image encoding method according to the present disclosure, and an overlapping description is omitted.

Referring to FIG. 10, an encoding device (i.e., an encoder) may determine whether decoder side intra mode derivation (DIMD) is applied to a current block S1000. As an example, according to the determination result, an encoding device may signal a DIMD flag indicating whether DIMD is applied to a current block through a bitstream. As an embodiment, when DIMD is applied, at least one intra prediction mode may be derived from a reconstructed neighboring sample, and a predictor may be derived by using a derived intra prediction mode. In deriving an intra prediction mode, gradient calculation may be performed for reconstructed neighboring samples.

A predictor derived by using a derived intra prediction mode may be combined with a planar mode predictor. A weighted sum may be performed based on a predetermined weight. As an example, a DIMD flag may indicate whether DIMD is applied to a luma component of a current block. Alternatively, a DIMD flag may indicate whether DIMD is applied to at least one of a luma component or a chroma component of a current block.

In addition, as an embodiment, a DIMD-derived intra prediction mode may be included in a Most Probable Mode (MPM) list. A DIMD process may be performed before configuring a MPM list. As an example, a derived intra prediction mode of a block to which DIMD is applied may be stored with a block and may be used to configure a MPM list of an adjacent block. In the present disclosure, the DIMD may be referred to as an intra derivation mode or an intra prediction mode derivation mode, and a DIMD flag may be referred to as an intra derivation mode flag, an intra prediction mode derivation mode flag, a first flag, etc.

An encoding device may determine whether Block Differential Pulse Coded Modulation (BDPCM) is applied to a chroma component of a current block based on whether DIMD is applied S1010. As an example, an encoding device may signal a BDPCM flag indicating whether BDPCM is applied to a chroma component of a current block through a bitstream. In the present disclosure, the BDPCM flag may be referred to as a BDPCM chroma flag, a chroma BDPCM flag, a second flag, etc. An embodiment previously described in FIGS. 7 and 8 may be applied in the same manner, and an overlapping description is omitted.

An encoding device may derive an intra prediction mode of a chroma component based on whether BDPCM is applied S1020. As an embodiment, when BDPCM is not applied to the chroma component, a chroma prediction mode index indicating an intra prediction mode of the chroma component among a plurality of intra prediction modes may be signaled. In other words, when BDPCM is not applied, general intra coding may be applied, and an intra prediction mode determination process for a chroma component may be performed.

In addition, as an embodiment, DIMD may be applied to a chroma component. As an example, a chroma DIMD flag indicating whether DIMD is applied to a chroma component may be signaled. Alternatively, as another example, a chroma DIMD mode representing a DIMD mode applied to a chroma component may be included in a chroma intra prediction mode group for chroma intra prediction. In this case, the plurality of intra prediction modes may include a chroma DIMD mode that derives a chroma intra prediction mode by using a reconstructed neighboring sample. In the present disclosure, a chroma DIMD mode may be referred to as a chroma intra derivation mode or a chroma intra prediction mode derivation mode.

In addition, when the BDPCM is applied to a chroma component, as described above, flag information indicating a prediction direction of BDPCM (referred to as a BDPCM prediction direction flag) may be signaled. An intra prediction mode may be determined (or derived) according to a BDPCM prediction direction. When BDPCM is applied, an intra prediction mode may be determined as any one of a vertical mode or a horizontal mode. Alternatively, when BDPCM is applied, an intra prediction mode may be determined as a mode corresponding to a BDPCM prediction direction among a plurality of predefined prediction modes. There may be at least three BDPCM prediction directions, and in this case, index information indicating a BDPCM prediction direction may be signaled.

An encoding device may generate a prediction sample of a chroma component based on a derived intra prediction mode S1030. In other words, an encoding device may generate a prediction sample (or a predictor) by using a neighboring reference sample according to a prediction direction of an intra prediction mode.

FIG. 11 shows a rough configuration of an intra predictor that performs an image encoding method according to an embodiment of the present disclosure.

Referring to FIG. 11, an intra predictor 221 may include a DIMD determination unit 1100, a BDPCM determination unit 1110, an intra prediction mode determination unit 1120 and a prediction sample generator 1130.

A DIMD determination unit 1100 may determine whether decoder side intra mode derivation (DIMD) is applied to a current block. As an example, a DIMD determination unit 1100 may signal a DIMD flag indicating whether DIMD is applied to a current block through a bitstream according to the determination result. As an embodiment, when DIMD is applied, at least one intra prediction mode may be derived from a reconstructed neighboring sample, and a predictor may be derived by using a derived intra prediction mode. In deriving an intra prediction mode, gradient calculation may be performed for reconstructed neighboring samples.

A predictor derived by using a derived intra prediction mode may be combined with a planar mode predictor. A weighted sum may be performed based on a predetermined weight. As an example, a DIMD flag may indicate whether DIMD is applied to a luma component of a current block. Alternatively, a DIMD flag may indicate whether DIMD is applied to at least one of a luma component or a chroma component of a current block.

In addition, as an embodiment, a DIMD-derived intra prediction mode may be included in a Most Probable Mode (MPM) list. A DIMD process may be performed before configuring a MPM list. As an example, a derived intra prediction mode of a block to which DIMD is applied may be stored with a block and may be used to configure a MPM list of an adjacent block. In the present disclosure, the DIMD may be referred to as an intra derivation mode or an intra prediction mode derivation mode, and a DIMD flag may be referred to as an intra derivation mode flag, an intra prediction mode derivation mode flag, a first flag, etc.

A BDPCM determination unit 1110 may determine whether Block Differential Pulse Coded Modulation (BDPCM) is applied to a chroma component of a current block based on whether DIMD is applied. As an example, an encoding device may signal a BDPCM flag indicating whether BDPCM is applied to a chroma component of a current block through a bitstream. In the present disclosure, the BDPCM flag may be referred to as a BDPCM chroma flag, a chroma BDPCM flag, a second flag, etc. An embodiment previously described in FIGS. 7 and 8 may be applied in the same manner, and an overlapping description is omitted.

An intra prediction mode determination unit 1120 may derive an intra prediction mode of a chroma component based on whether BDPCM is applied. As an embodiment, when BDPCM is not applied to the chroma component, a chroma prediction mode index indicating an intra prediction mode of the chroma component among a plurality of intra prediction modes may be signaled. In other words, when BDPCM is not applied, general intra coding may be applied, and an intra prediction mode determination process for a chroma component may be performed.

In addition, as an embodiment, DIMD may be applied to a chroma component. As an example, a chroma DIMD flag indicating whether DIMD is applied to a chroma component may be signaled. Alternatively, as another example, a chroma DIMD mode representing a DIMD mode applied to a chroma component may be included in a chroma intra prediction mode group for chroma intra prediction. In this case, the plurality of intra prediction modes may include a chroma DIMD mode that derives a chroma intra prediction mode by using a reconstructed neighboring sample. In the present disclosure, a chroma DIMD mode may be referred to as a chroma intra derivation mode or a chroma intra prediction mode derivation mode.

In addition, when the BDPCM is applied to a chroma component, as described above, flag information indicating a prediction direction of BDPCM (referred to as a BDPCM prediction direction flag) may be signaled. An intra prediction mode may be determined (or derived) according to a BDPCM prediction direction. When BDPCM is applied, an intra prediction mode may be determined as any one of a vertical mode or a horizontal mode. Alternatively, when BDPCM is applied, an intra prediction mode may be determined as a mode corresponding to a BDPCM prediction direction among a plurality of predefined prediction modes. There may be at least three BDPCM prediction directions, and in this case, index information indicating a BDPCM prediction direction may be signaled.

A prediction sample generator 1130 may generate a prediction sample of a chroma component based on a derived intra prediction mode. In other words, a prediction sample generator 1130 may generate a prediction sample (or a predictor) by using a neighboring reference sample according to a prediction direction of an intra prediction mode.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding device and/or a decoding device according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding device and an encoding device to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

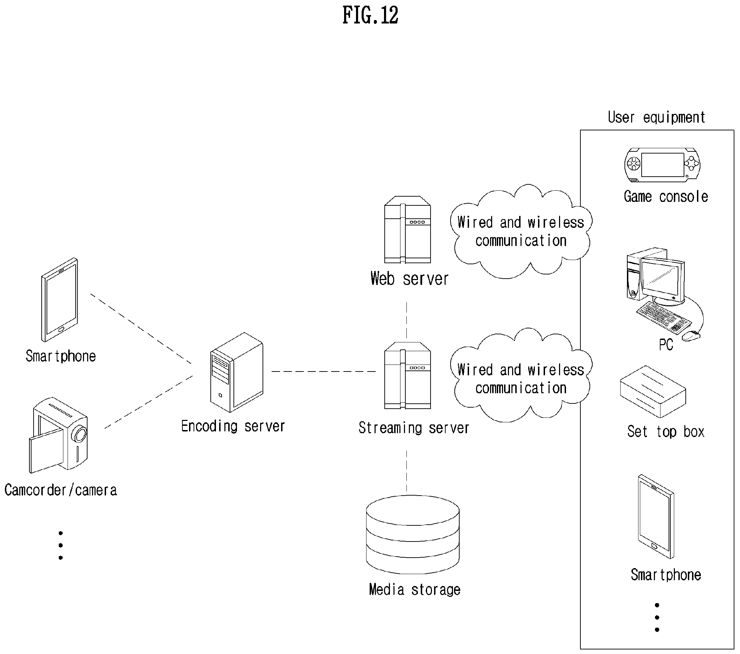

FIG. 12 shows an example of a contents streaming system to which embodiments of the present disclosure may be applied.

Referring to FIG. 12, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1. An image decoding method, the method comprising:

    acquiring a first flag indicating whether an intra derivation mode is applied to a current block, wherein the intra derivation mode represents a mode for deriving an intra prediction mode by using a reconstructed neighboring sample;
    acquiring a second flag indicating whether a Block Differential Pulse Coded Modulation (BDPCM) is applied to a chroma component of the current block based on the first flag;
    deriving an intra prediction mode of the chroma component based on the second flag; and
    generating a prediction sample of the chroma component based on the intra prediction mode.

2. The method of claim 1, wherein:
    deriving the intra prediction mode includes obtaining a first index indicating the intra prediction mode of the chroma component among a plurality of intra prediction modes when the second flag indicates that the BDPCM is not applied to the chroma component.

3. The method of claim 2, wherein:
    the plurality of intra prediction modes include a chroma intra derivation mode that derives a chroma intra prediction mode by using the reconstructed neighboring sample.

4. The method of claim 2, wherein:
    deriving the intra prediction mode includes obtaining a third flag indicating a prediction direction of the BDPCM when the second flag indicates that the BDPCM is applied to the chroma component.

5. The method of claim 1, wherein:
    acquiring the second flag includes obtaining the second flag from a bitstream based on whether a predefined condition is satisfied.

6. The method of claim 5, wherein:
   the second flag is acquired from the bitstream only when the first flag indicates that the intra derivation mode is not applied to the current block.

7. The method of claim 5, wherein:
   the second flag is acquired from the bitstream only when a tree type of the current block is a single tree and the first flag indicates that the intra derivation mode is not applied to the current block.

8. The method of claim 5, wherein:
   if the predefined condition is not satisfied, the second flag is inferred to be 0.

9. An image encoding method, the method comprising:

   determining whether an intra derivation mode is applied to a current block, wherein the intra derivation mode represents a mode for deriving an intra prediction mode by using a reconstructed neighboring sample;
   determining whether a Block Differential Pulse Coded Modulation (BDPCM) is applied to a chroma component of the current block based on whether the intra derivation mode is applied;
   determining an intra prediction mode of the chroma component based on whether the BDPCM is applied; and
   generating a prediction sample of the chroma component based on the intra prediction mode.

10. A computer readable storage medium storing a bitstream generated by an image encoding method according to claim 9.

11. A method for transmitting data for image information, the method comprising:

    determining whether an intra derivation mode is applied to a current block, wherein the intra derivation mode represents a mode for deriving an intra prediction mode by using a reconstructed neighboring sample;
    determining whether a Block Differential Pulse Coded Modulation (BDPCM) is applied to a chroma component of the current block based on whether the intra derivation mode is applied;
    determining an intra prediction mode of the chroma component based on whether the BDPCM is applied;
    generating a prediction sample of the chroma component based on the intra prediction mode;
    generating a bitstream by encoding the current block based on the prediction sample of the chroma component; and
    transmitting data including the bitstream.

FIG.1

```
┌─────────────────────┐        ┌─────────────────────┐
│    SOURCE           │        │    RECEIVE          │
│    DEVICE           │        │    DEVICE           │
│                     │        │                     │
│  ┌───────────────┐  │        │  ┌───────────────┐  │
│  │    VIDEO      │  │        │  │   RENDERER    │  │
│  │   SOURCE      │  │        │  └───────────────┘  │
│  └───────────────┘  │        │          ↑          │
│          │          │        │  ┌───────────────┐  │
│          ↓          │        │  │   DECODING    │  │
│  ┌───────────────┐  │        │  │  APPARATUS    │  │
│  │   ENCODING    │  │        │  └───────────────┘  │
│  │  APPARATUS    │  │        │          ↑          │
│  └───────────────┘  │        │  ┌───────────────┐  │
│          │          │        │  │   RECEIVER    │  │
│          ↓          │        │  └───────────────┘  │
│  ┌───────────────┐  │   →    │                     │
│  │ TRANSMITTER   │──┼────────┼→                    │
│  └───────────────┘  │        │                     │
└─────────────────────┘        └─────────────────────┘
```

# FIG.2

FIG.3

EP 4 436 168 A1

# FIG.4

Perform prediction (determine intra prediction mode/type, derive neighboring reference samples, generate prediction samples) — S400

Process residual (derive residual samples based on prediction samples) — S410

Encode image/video information including prediction information and residual information — S420

# FIG.5

Determine intra prediction mode/type for current block based on received prediction information — S500

Derive neighboring reference samples — S510

Perform prediction (generate prediction samples) — S520

Derive residual samples based on residual information — S530

Generate reconstructed block/picture based on prediction samples and residual samples — S540

## FIG.6

| Determine intra prediction mode/type | ～ S600 |

↓

| Derive neighboring reference samples | ～ S610 |

↓

| Perform intra prediction | ～ S620 |

## FIG.7

| Obtain DIMD flag | ～ S700 |

↓

| Obtain BDPCM flag | ～ S710 |

↓

| Derive intra prediction mode | ～ S720 |

↓

| Generate prediction sample | ～ S730 |

FIG.8

## FIG.9

331

Intra prediction unit

| DIMD flag<br>acquisition<br>unit | → | BDPCM flag<br>acquisition<br>unit | → | Intra prediction<br>mode derivation<br>unit | → | Prediction<br>sample<br>generation unit |

900       910       920       930

## FIG.10

Determine whether to apply DIMD ⟩— S1000

↓

Determine whether to apply BDPCM ⟩— S1010

↓

Determine intra prediction mode ⟩— S1020

↓

Generate prediction sample ⟩— S1030

## FIG.11

221

Intra prediction unit

| DIMD<br>determination<br>unit | → | BDPCM<br>determination<br>unit | → | Intra prediction<br>mode determination<br>unit | → | Prediction<br>sample<br>generation unit |

1100      1110      1120      1130

FIG.12

EP 4 436 168 A1

## INTERNATIONAL SEARCH REPORT

| International application No. |
|---|
| **PCT/KR2022/018296** |

**A. CLASSIFICATION OF SUBJECT MATTER**

**H04N 19/11**(2014.01)i; **H04N 19/593**(2014.01)i; **H04N 19/186**(2014.01)i; **H04N 19/176**(2014.01)i; **H04N 19/70**(2014.01)i

According to International Patent Classification (IPC) or to both national classification and IPC

**B. FIELDS SEARCHED**

Minimum documentation searched (classification system followed by classification symbols)

H04N 19/11(2014.01); H04N 19/157(2014.01); H04N 19/159(2014.01); H04N 19/46(2014.01); H04N 19/593(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 인트라(intra), 예측(predict), BDPCM(block differential pulse coded modulation), 유도(derive), 크로마(chroma), 플래그(flag)

**C. DOCUMENTS CONSIDERED TO BE RELEVANT**

| Category* | Citation of document, with indication, where appropriate, of the relevant passages | Relevant to claim No. |
|---|---|---|
| Y | WO 2020-256389 A1 (LG ELECTRONICS INC.) 24 December 2020 (2020-12-24)<br>See paragraphs [0050]-[0055], [0102]-[0103], [0111], [0124], [0142], [0144], [0151]-[0157], [0184] and [0217]; claims 1 and 5; and figure 2. | 1-11 |
| Y | ABDOLI, Mohsen et al. DECODER-SIDE INTRA MODE DERIVATION FOR NEXT GENERATION VIDEO CODING. 2020 IEEE International Conference on Multimedia and Expo (ICME). pp. 1-6, 06-10 July 2020.<br>See pages 1-4; and figure 1. | 1-11 |
| Y | US 2020-0404324 A1 (QUALCOMM INCORPORATED) 24 December 2020 (2020-12-24)<br>See paragraphs [0030], [0126] and [0255]. | 1-11 |
| A | US 2021-0203985 A1 (QUALCOMM INCORPORATED) 01 July 2021 (2021-07-01)<br>See paragraphs [0005], [0089] and [0129]-[0134]; and claims 1-4. | 1-11 |
| A | US 2021-0306654 A1 (XRIS CORPORATION) 30 September 2021 (2021-09-30)<br>See paragraph [0599]; and claim 1. | 1-11 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 February 2023** | **24 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

Form PCT/ISA/210 (patent family annex) (July 2022)

<table>
<tr><td colspan="2">INTERNATIONAL SEARCH REPORT<br>Information on patent family members</td><td colspan="2">International application No.<br><br>**PCT/KR2022/018296**</td></tr>
</table>

| Patent document cited in search report | | | Publication date (day/month/year) | Patent family member(s) | | | Publication date (day/month/year) |
|---|---|---|---|---|---|---|---|
| WO | 2020-256389 | A1 | 24 December 2020 | CN | 113994669 | A | 28 January 2022 |
| | | | | EP | 3989567 | A1 | 27 April 2022 |
| | | | | JP | 2022-533771 | A | 25 July 2022 |
| | | | | KR | 10-2021-0142007 | A | 23 November 2021 |
| | | | | US | 2022-0078433 | A1 | 10 March 2022 |
| US | 2020-0404324 | A1 | 24 December 2020 | | None | | |
| US | 2021-0203985 | A1 | 01 July 2021 | CN | 114830649 | A | 29 July 2022 |
| | | | | EP | 4082191 | A1 | 02 November 2022 |
| | | | | US | 11368715 | B2 | 21 June 2022 |
| | | | | WO | 2021-133731 | A1 | 01 July 2021 |
| US | 2021-0306654 | A1 | 30 September 2021 | CN | 112740677 | A | 30 April 2021 |
| | | | | KR | 10-2020-0105434 | A | 07 September 2020 |
| | | | | WO | 2020-175938 | A1 | 03 September 2020 |